# EUROPÄISCHE PATENTSCHRIFT

(11) **EP 3 089 641 B1**
(45) Veröffentlichungstag und Bekanntmachung des Hinweises auf die Patenterteilung: **17.05.2017**
(21) Anmeldenummer: 16705744.7
(22) Anmeldetag: 08.02.2016
(51) Int. Cl.: A47J 31/44

(54) **GETRÄNKEZUBEREITUNGSVORRICHTUNG SOWIE BETRIEBSVERFAHREN**
BEVERAGE-MAKING APPARATUS AND OPERATING METHOD
DISPOSITIF DE PRÉPARATION DE BOISSON, ET PROCÉDÉ DE FONCTIONNEMENT

(30) Priorität: 02.04.2015 DE 102015105184
(43) Veröffentlichungstag der Anmeldung: 09.11.2016
(73) Patentinhaber: Eugster/Frismag AG, 8580 Amriswil (CH)
(72) Erfinder: FISCHER, Daniel, 8590 Romanshorn (CH); SONDEREGGER, Lukas, 9435 Heerbrugg (CH)
(74) Vertreter: Wagner, Kilian
(86) Internationale Anmeldenummer: PCT/EP2016/052621
(87) Internationale Veröffentlichungsnummer: WO 2016/155920

(56) Entgegenhaltungen:
- EP-A1- 2 245 969
- DE-U1-202008 016 400

## Beschreibung

Die Erfindung betrifft eine Getränkezubereitungsvorrichtung gemäß dem Oberbegriff des Anspruchs 1, insbesondere eine Kaffeemaschine, mit einem Gehäuse und mit einer Einrichtung zum Erwärmen und Aufschäumen von Milch und mit einer, bevorzugt als Saugleitung ausgebildeten Milchleitung, über die die Einrichtung zum Erwärmen und/oder Aufschäumen mit Milch versorgbar ist.

Ferner betrifft die Erfindung ein Betriebsverfahren für eine solche Getränkezubereitungsvorrichtung gemäß Anspruch 13.

Getränkezubereitungsvorrichtungen mit Milcherwärmungs- und/oder Aufschäumfunktion sind seit langem bekannt. Die hierzu zum Einsatz kommende Erwärmungs- und/oder Aufschäumeinrichtung umfasst in der Regel eine Düsenanordnung (Strahlpumpe), die fluidleitend mit einer Dampfversorgungsleitung verbunden ist, wodurch der durch eine Treibdüse der Düsenanordnung ausströmende Dampf Milch durch eine Milchleitung (hier: Saugleitung) ansaugt, die dann in einer Misch- bzw. Aufschäumkammer erwärmt und/oder aufgeschäumt und dann durch eine Auslassöffnung einer Kaffeetasse zugeführt wird. In die Milchleitung mündet in der Regel eine Luftleitung, über die die Milch mit Luft für den fakultativen Aufschäumvorgang versorgbar ist. Getränkezubereitungsvorrichtungen mit Milcherwärmungs- und/oder Aufschäumvorrichtung sind beispielsweise in der EP 2 807 964 A1 der EP 1 115 317 B1, der EP 2 196 118 B1 oder der DE 20 2011 107 306 U1 beschrieben.

Auch bekannt sind Getränkezubereitungsvorrichtungen, bei denen ein Milchbehältnis in einer verschwenkbar angeordnete Gehäusetür angeordnet und mit der Milchleitung der Milcherwärmungs- und/oder Aufschäumeinrichtung verbunden wird. Bevorzugt ist es, den eigentlichen Milchbehälter im Bereich der Tür mit einer ortsfesten Kopplungseinrichtung zu verbinden, die über eine Milchleitung mit einem türseitigen Versorgungsanschluss mit Milch fluidleitend verbunden ist, wobei der Versorgungsanschluss durch Schließen der Tür mit der gehäuseseitigen Milchleitung verbunden wird. Hierdurch muss ein dem Versorgungsanschluss zugewandtes Anschlussende der Milchleitung so ausgebildet und ausgerichtet sein, dass der Versorgungsanschluss am Ende der Verschwenkbewegung der Tür dichtend aufgenommen werden kann. Dies hat zur Folge, dass bei Heißgetränkezubereitungsvorrichtungen, die mit linksanschlagender oder alternativ rechtsanschlagender Tür angeboten werden sollen, jeweils eine unterschiedliche Konfiguration des gehäuseseitigen Milchleitungsendes notwendig ist, da der Versorgungsanschluss je nach Türanschlagsposition von der einen oder der anderen Richtung her beim Vorschwenken der Tür einen Radius beschreibt und so jeweils für eine der Anschlagsposition abgestimmte Ausrichtung des Milchleitungsanschlusses nicht für die jeweils alternative Türanschlagsposition zum Garantieren einer dichten Verbindung mit dem Versorgungsanschluss passend ist.

Ausgehend von dem vorgenannten Stand der Technik liegt der Erfindung die Aufgabe zugrunde, eine alternative Getränkezubereitungsvorrichtung anzugeben, die unabhängig von der Art und Weise der Positionierung und/oder einer etwaigen Verstellbewegung eines Versorgungsanschlusses für Milch eine fluiddichte Kopplung zwischen Milchleitung und Versorgungsanschluss sicherstellt. Insbesondere soll die Getränkezubereitungsvorrichtung für den bevorzugten, jedoch nicht notwendigerweise realisierbaren Fall einer türseitigen Anordnung des Versorgungsanschlusses alternativ mit rechtem oder linkem Türanschlag verwirklichbar sein, ohne dass eine Umkonfiguration der Milchleitungsposition im Gehäuse der Getränkezubereitungsvorrichtung notwendig ist. Bevorzugt soll die Getränkezubereitungsvorrichtung dabei derart ausgebildet sein, dass in einem Milchaufschäumbetriebszustand insbesondere bei unterstellter gleicher Förderleitung von Fördermitteln für Milch ein Milchvolumenstrom über die Milchleitung förderbar ist der unterschiedlich ist von einem in einem reinen Milcherwärmungsbetriebszustand geförderten Milchvolumen, in dem die Milch nur erwärmt, nicht jedoch aufgeschäumt wird. Weiter bevorzugt ist die Getränkezubereitungsvorrichtung derart ausgestaltet, dass eine Kontamination der Milch in einen mit dem Versorgungsanschluss fluidleitend verbundenen Milchvorratsbehälter mit Spülmedium bzw. einem Spülvorgang der Milchleitung sicher vermieden wird. Ferner besteht die Aufgabe darin, ein optimiertes Betriebsverfahren für eine solche Getränkezubereitungsvorrichtung anzugeben.

Diese Aufgabe wird hinsichtlich der Getränkezubereitungsvorrichtung mit den Merkmalen des Anspruchs 1 gelöst, d.h. bei einer gattungsgemäßen Getränkezubereitungsvorrichtung dadurch, dass die Milchleitung fluidleitend mit Andockmitteln verbunden ist, die ein mittels eines Antriebs, insbesondere eines Elektromotors, zwischen mindestens einer Parkposition, einer von der Parkposition beabstandeten ersten Andockposition, insbesondere einer Milcherwärmungsposition, und einer von der Parkposition und der ersten Andockposition beabstandeten zweiten Andockposition, insbesondere einer Milchaufschäumposition, verstellbares Andockelement umfassen, das sowohl in der ersten als auch in der zweiten Andockposition mit einem Versorgungsanschluss für Milch verbunden (d.h. durch Verstellen aus der mindestens einen Parkposition in die erste oder zweite Andockposition fluidleitend mit dem Versorgungsanschluss verbindbar) und in der Parkposition von diesem abgekoppelt, d.h. durch Verstellen aus der ersten oder zweiten Andockposition in die mindestens eine Parkposition von dem Versorgungsanschluss abkoppelbar (fluidisch trennbar) ist, und dass die Andockmittel als Fluidventil ausgebildet sind, mit denen durch Verstellen des Andockelementes von der ersten in die zweite Andockposition ein freier Durchflussquerschnitt für Milch zum Einstellen (verändern) eines Milchvolumenstroms veränderbar ist.
Hinsichtlich des Betriebsverfahrens wird die Aufgabe mit den Merkmalen des Anspruchs 13 gelöst, d.h. dadurch, dass das Andockelement zum fluidleitenden Verbinden der Milchleitung mit dem Versorgungsanschluss für Milch mittels des Antriebs, insbesondere des Elektromotors, von der mindestens einen Parkposition in die davon beabstandete erste oder zweite Andockposition verstellt und dadurch an den Versorgungsanschluss angekoppelt (fluidleitend verbunden) wird, und dass das Andockelement zum Abkoppeln (d.h. zum fluidischen Trennen) der Milchleitung von dem Versorgungsanschluss aus der ersten oder zweiten Andockposition in die mindestens eine Parkposition verstellt wird, und dass der freie Durchflussquerschnitt für Milch zum Einstellen des zu der Erwärmung- und Aufschäumeinrichtung geförderten Milchvolumenstroms durch Verstellen des Andockelements von der ersten in die zweite Andockposition verändert wird.
Vorteilhafte Weiterbildungen der Erfindung sind in den Unteransprüchen angegeben.

Der Erfindung liegt der Gedanke zugrunde, der bevorzugt als Saugleitung ausgebildeten Milchleitung, über die die vorzugsweise eine mit Dampf speisbare Düsenanordnung aufweisende Einrichtung zum Erwärmen oder Aufschäumen von Milch mit Milch versorgbar ist, Andockmittel zuzuordnen bzw. fluidleitend mit diesen zu verbinden, wobei die Andockmittel ein mittels eines Antriebs, insbesondere eines Elektromotors, verstellbares Andockelement umfassen. Dieses Andockelement ist mittels des Elektromotors zwischen mindestens einer, insbesondere von dem Versorgungsanschluss für Milch beabstandeten Parkposition und zwei, insbesondere entlang eines geradlinigen oder gekrümmten Verstellweges, beabstandeten Andockpositionen (d.h. einer ersten und einer zweiten Andockposition) verstellbar, wobei das Andockelement in beiden Andockpositionen fluidleitend mit dem Versorgungsanschluss für Milch verbunden ist, so dass Milch über den Versorgungsanschluss in die Milchleitung und über diese in die Einrichtung zum Erwärmen und Aufschäumen von Milch strömen kann.

In der mindestens einen Parkposition ist die vorerwähnte fluidleitende Verbindung unterbrochen, d.h. das Andockelement ist von dem Versorgungsanschluss abgekoppelt, insbesondere beabstandet.

Durch die gleichzeitige Ausbildung der Andockmittel als Fluidventil haben diese erfindungsgemäß nicht nur die Funktion der fluidleitenden Verbindung und Entkopplung der Milchleitung und damit der Erwärmungs- und Aufschäumeinrichtung mit bzw. von dem Versorgungsanschluss und damit mit dem Milchbehältnis sondern ermöglichen es, ohne dass ein zusätzliches Drosselventil vorgesehen werden müsste, den Milchvolumenstrom einzustellen, in dem der freie, von den Andockmitteln begrenzte Durchflussquerschnitt für Milch in der ersten und der davon beabstandeten zweiten Andockposition unterschiedlich ist. Anders ausgedrückt haben die Andockmittel neben der fluidischen Ankopplung und Entkopplungsfunktion auch eine Milchflussdrosselfunktion, d.h. sie sind als fluidisches Drosselventil ausgebildet, mit dem der Milchvolumenstrom einstellbar ist, wobei dies erreicht wird durch das Bereitstellen unterschiedlicher freier Durchflussquerschnitte in der ersten und der zweiten Andockposition. Bevorzugt ist es dabei, wenn der freie Durchflussquerschnitt für die Milch in einem Milchaufschäumbetriebszustand, d.h. in der zweiten Andockposition größer ist als in dem (insbesondere reinen) Milcherwärmungsbetriebszustand, d.h. der ersten Andockposition, um somit, bei unterstellter gleicher Förderleistung von Fördermitteln für Milch, insbesondere Ansaugmitteln in dem Milchaufschäumbetriebszustand einen größeren Milchvolumenstrom fördern zu können als in dem Milcherwärmungsbetriebszustand. Bevorzugt unterscheiden sich der Milchaufschäumbetriebszustand und der Milcherwärmungsbetriebszustand zusätzlich noch dadurch, dass der Milch im Milchaufschäumbetriebszustand zusätzlich Luft zugeführt wird, beispielsweise, wie später noch im Rahmen einer vorteilhaften Weiterbildung der Erfindung erläutert werden wird, unmittelbar in den Andockmitteln und/oder alternativ beabstandet hierzu, insbesondere in die Milchleitung und/oder eine Misch- bzw. Aufschäumkammer der Einrichtung zum Erwärmen und Aufschäumen von Milch. Bevorzugt wird im Milcherwärmungsbetriebszustand der Milch keine Luft zugeführt, jedenfalls zumindest ein geringerer Luftvolumenstrom als in dem Milchaufschäumbetriebszustand.

Die erfindungsgemäße Getränkezubereitungsvorrichtung ermöglicht es neben der Einstellung des Milchvolumenstroms mit dem Andockelement aus mindestens einer Parkposition heraus eine der Andockpositionen anzufahren, in welcher das Andockelement mit dem Versorgungsanschluss gekoppelt ist. Da das Andockelement in der mindestens einen Parkposition nicht fluidleitend mit dem Versorgungsanschluss verbunden, d.h. nicht mit diesem gekoppelt und bevorzugt von dem Versorgungsanschluss beabstandet ist, ist sichergestellt, dass bei einer Spülung der Milchleitung mit einem Spülmedium eine Kontamination von Milch in dem fluidleitend mit dem Versorgungsanschluss verbundenen Milchbehälter sicher verhindert wird, selbst für den Fall, dass das Andockelement selbst eine Undichtigkeit aufweisen sollte - aufgrund der Entkopplung und der bevorzugten Beabstandung kann bei einer erfindungsgemäß ausgestalteten Getränkezubereitungsvorrichtung jedenfalls kein Spülmedium aus dem in der mindestens einen Parkposition befindlichen Andockelement zum Versorgungsanschluss gelangen.

Aufgrund der erfindungsgemäßen Ausgestaltung der Getränkezubereitungsvorrichtung durch das Vorsehen von ein positionsveränderbares Andockelement aufweisenden Andockmitteln ist es zudem zur Garantie bzw. für die Herstellung einer dichten Verbindung zwischen dem Versorgungsanschluss und der Milchleitung unwesentlich, ob der Versorgungsanschluss dauerhaft fest so angeordnet ist, dass das Andockelement in seiner Andockposition mit dem Versorgungsanschluss koppelbar ist, oder ob der Versorgungsanschluss vor dem Verstellen des Andockelementes zunächst in diese Funktionsposition verstellt werden muss, insbesondere für den Fall, dass der Versorgungsanschluss an einer fakultativen Tür der Getränkezubereitungsvorrichtung angeordnet ist und durch Schließen der Tür in die Funktionsposition verstellbar ist oder wenn der Versorgungsanschluss fest mit einem austauschbaren Milchbehältnis gekoppelt ist und das Milchbehältnis über unterschiedliche Verstellwege an seine Position an der Getränkezubereitungsvorrichtung gebracht werden kann. Für den Fall der Anordnung des Versorgungsanschlusses an einer Tür, kann diese Tür alternativ mit Rechts- oder Linksanschlag realisiert werden, ohne dass eine Veränderung der Konfiguration der Andockmittel notwendig ist - es muss nur sichergestellt werden, dass der Versorgungsanschluss unabhängig von der Wahl des Türanschlags nach dem Schließen der Tür immer an der selben Funktionsposition angeordnet ist. Auf welchem Weg der Versorgungsanschluss in diese Position verstellt, insbesondere verschwenkt wird, ist jedoch aufgrund des Vorsehens des positionsveränderlichen Andockelementes gleichgültig, da hier erstmals aktiv aus Richtung der Milchleitung her mittels eines Antriebs eine Kopplungsposition angefahren wird, d.h. die endgültige Kopplung muss nicht zwingend von Seite des Versorgungsanschlusses für Milch her erfolgen, sondern es erfolgt maschinenseitig bzw. gehäuseseitig eine Ankopplung bzw. ein Andocken durch Verstellen des Andockelementes in mindestens eine Andockposition, also auf den Versorgungsanschluss zu. Bevorzugt ist der Versorgungsanschluss bzw. ist eine Versorgungsanschlussöffnung bei in der Parkposition befindlichem Andockelement offen.

Bevorzugt beträgt der Verstellweg zwischen mindestens einer Parkposition und zumindest einer der mindestens zwei Andockpositionen und/oder der Verstellung zwischen der ersten und der zweiten Andockposition mindestens 0,5cm, ganz besonders bevorzugt 1 cm. Ganz besonders bevorzugt ist der vorgenannte Verstellweg zwischen 0,5cm und 5cm gewählt.

Besonders zweckmäßig ist es, wenn das Andockelement, zumindest abschnittsweise zur Gewährleistung einer dichten, fluidleitenden Verbindung aus Elastomermaterial ausgebildet ist, um somit unmittelbar eine Abdichtfunktion für die Verbindung aus Andockelement und Versorgungsanschluss von Seiten des Andockelementes her zu übernehmen. Zudem ist es bei einer Ausbildung des Andockelementes aus Elastomermaterial auf einfache Weise möglich, durch Verwirklichung unterschiedlicher Relativpositionen des Andockelementes zu einem später noch zu erläuternden Kolben unterschiedliche Fluidwege freizuschalten, indem das als Elastomermaterial ausgebildete Andockelement positionsabhängig mit unterschiedlichen Stellen des Kolbens dichtend zusammenwirken kann.

Im Hinblick auf die konkrete Ausgestaltung der Einrichtung zum Erwärmen und Aufschäumen von Milch gibt es unterschiedliche Möglichkeiten - grundsätzlich ist es möglich, die Milch mittels einer Pumpe durch eine Milchleitung zu fördern. Auch müssen die Erwärmungs- und/oder Aufschäummittel nicht zwingend auf Dampfbasis arbeiten, d.h. es können mechanisch arbeitende Aufschäummittel realisiert sein und/oder die Erwärmungsmittel können eine elektrische Heizung umfassen. Bevorzugt umfasst die Einrichtung zum Erwärmen und Aufschäumen der Milch jedoch eine sogenannte Strahlpumpe, die mit einer Dampferzeugungseinrichtung der Getränkezubereitungsvorrichtung verbunden ist und mittels der bei Dampfdurchströmung ein Unterdruck erzeugt wird, mittels dem die Milch über die dann als Saugleitung ausgebildete Milchleitung und das in einer Andockposition befindliche Andockelement über den Versorgungsanschluss für Milch Milch aus einem Milchbehälter in einer Erwärmungs- und/oder Aufschäumkammer ansaugt, aus der dann erwärmte Milch oder für den Fall der Luftzugabe Milchschaum in ein Trinkbehältnis, insbesondere eine Kaffeetasse ausströmen kann. Grundsätzlich ist es möglich, dass die Einrichtung zum Erwärmen und Aufschäumen von Milch zwei getrennte, insbesondere beabstandete Funktionseinheiten, nämlich eine Erwärmungseinheit und eine Aufschäumeinheit aufweist, insbesondere für den Fall, dass das Aufschäumen mit Hilfe von mechanischen Aufschäummitteln und das Aufwärmen elektrisch oder mit Dampf erfolgt. Alternativ ist es möglich und bevorzugt, insbesondere dann, wenn das Erwärmen und Aufschäumen mittels Dampf durch den Einsatz einer Düse bzw. Strahlpumpe erfolgt, das Erwärmen und Aufschäumen in einer gemeinsamen Einheit realisiert ist, d.h. die Einrichtung zum Erwärmen und Aufschäumen eine (gemeinsame) Funktionseinheit aufweist bzw. als solche realisiert ist.

Erfindungsgemäß wird zum Herstellen einer fluidleitenden Verbindung zwischen dem bevorzugt mit einem Milchbehältnis verbundenen und/oder lösbar verbindbaren Versorgungsanschluss und der Einrichtung zum Aufschäumen und Erwärmen von Milch eine fluidleitende Verbindung hergestellt, in den aktiv mittels eines Antriebs, insbesondere eines Elektromotors ein Andockelement aus einer, bevorzugt von dem Versorgungsanschluss beabstandeten Parkposition in eine der Andockpositionen verstellt wird, beispielsweise translatorisch und/oder durch eine Schwenkbewegung, wobei die Andockpositionen so gewählt sind, dass in dieser das Andockelement fluidleitend gekoppelt bzw. angedockt ist an den Versorgungsanschluss für Milch.

Zum Entkoppeln, d.h. zum Trennen der fluidleitenden Verbindung wird das Andockelement mittels des vorerwähnten Antriebs zurück in die mindestens eine Parkposition verstellt.

Grundsätzlich möglich ist eine Ausführungsvariante und liegt im Rahmen der Erfindung, bei der der Versorgungsanschluss fest relativ zum Gehäuse der Getränkezubereitungsvorrichtung positioniert ist, d.h. ohne Demontage seine Position nicht verändert werden kann. Bevorzugt ist jedoch eine alternative Ausführungsform, bei der der Versorgungsanschluss relativ zu der Andockposition verstellbar angeordnet ist, insbesondere indem der Versorgungsanschluss fest an einer relativ zu dem Gehäuse verstellbar, insbesondere verschwenkbar angeordneten Tür, positioniert ist und durch Verstellen der Tür relativ zu der mindestens einen Andockposition verstellt werden kann. Für den Fall der festen Anordnung des Versorgungsanschlusses an einer verstellbaren Tür der Getränkezubereitungsvorrichtung ist es bevorzugt, wenn an der Tür Kopplungsmittel vorgesehen sind, mit denen ein Milchbehälter der Getränkezubereitungsvorrichtung lösbar mit dem türfesten Versorgungsanschluss koppelbar ist. Alternativ ist es möglich, den Versorgungsanschluss fest an einem Milchbehältnis anzuordnen und somit den Versorgungsanschluss durch Positionieren des Milchbehältnisses relativ zum Gehäuse der Getränkezubereitungsvorrichtung zu positionieren. Denkbar ist auch alternativ eine Kombination, derart, dass der Versorgungsanschluss fest mit dem Milchbehälter verbunden ist, und der Milchbehälter an einer fakultativen Tür der Getränkezubereitungsvorrichtung anordnenbar ist und dass das Verstellen relativ zu der Andockposition durch Verstellen, insbesondere Verschwenken der fakultativen Tür erfolgt.

Wie eingangs bereits erwähnt, ist eine Ausführungsform besonders bevorzugt, bei der die Getränkezubereitungsvorrichtung eine Tür umfasst, die alternativ in einer Linksanschlags- oder Rechtsanschlagsposition montierbar ist, wobei der Versorgungsanschluss derart an der Tür angeordnet ist, dass dieser, unabhängig davon, ob die Tür mit Linksanschlag oder Rechtsanschlag montiert wird, bei geschlossener Tür immer in derselben (Funktionsposition) angeordnet ist, in der das Andockelement nach dem Verstellen in eine der Andockpositionen fluidleitend mit dem Versorgungsanschluss verbunden ist. Bevorzugt ist ein freies Versorgungsanschlussende hierzu mittig bezogen auf die Türbreite angeordnet.

Bevorzugt fluchten in dieser Position der Versorgungsanschluss und ein bevorzugt translatorischer Verstellweg des Andockelementes in einer Verstellachse.

Im Hinblick auf die Art und Weise der Realisierung der, beispielsweise translatorischen oder alternativ beispielsweise rotatorisch oder führungskulissen geführten Verstellbewegung des Andockelementes zwischen der mindestens einen Parkposition und den Andockpositionen gibt es unterschiedliche Möglichkeiten. So ist es denkbar, den Antrieb, d.h. insbesondere den Elektromotor ortsfest anzuordnen und das Andockelement so mit dem Antrieb zu koppeln, dass dieses durch Betreiben des Antriebs relativ zu dem Antrieb verstellt wird. Besonders zweckmäßig und bevorzugt ist eine Ausführungsform, bei der das Andockelement fest mit dem Antrieb, insbesondere einem nicht rotierenden Abschnitt, insbesondere einem Gehäuseabschnitt des Antriebs verbunden ist und der Antrieb zusammen mit dem Andockelement bei Betrieb des Antriebs relativ bzw. entlang einer ortsfesten, insbesondere gehäusefesten Führung, beispielsweise einer Zahnstange oder einer Spindel, noch weiter bevorzugt translatorisch verstellbar ist.

Wie später noch erläutert werden wird, ermöglicht insbesondere eine derartige Konfiguration des Antriebs eine bevorzugte Ausführungsform, bei der das Andockelement zusammen mit dem Antrieb relativ zu einem ortfesten Kolben verstellbar ist, wobei durch Relativverstellen des Andockelementes relativ zu dem Kolben unterschiedliche Schaltzustände der dann bevorzugt als Fluidventil ausgebildeten Andockmittel realisierbar sind.

Besonders zweckmäßig ist eine Ausführungsform der Getränkezubereitungsvorrichtung, bei der die Andockmittel im Rahmen ihrer Fluidventilfunktion derart ausgebildet sind, dass mit diesen durch Verstellen des Andockelementes mindestens ein (zusätzlich zu dem Versorgungsanschluss vorgesehener) Kanal fluidleitend mit der Milchleitung verbindbar und von diesem fluidisch trennbar ist. Anders ausgedrückt ist ein solcher abhängig von der Position des Andockelementes der Andockmittel fluidleitend mit der Milchleitung verbunden oder nicht.

Wie später noch erläutert werden wird, handelt es sich bei einem solchen Kanal bevorzugt um einen Spülkanal zum Spülen des Saugkanals in der mindestens einen Parkposition des Andockelementes, d.h. in der Position, in der die Milchleitung nicht fluidleitend mit dem Versorgungsanschluss verbunden ist.

Wie zuvor bereits angedeutet, ist es besonders zweckmäßig, wenn das Andockelement relativ zu einem ortsfesten Kolben verstellbar ist. Hierzu ist das Andockelement bevorzugt als Andockhülse ausgebildet, in der der Kolben aufgenommen ist. Durch, insbesondere translatorisches Relativverstellen des Andockelementes relativ zu dem Kolben sind unterschiedliche Fluidventilstellungen der als Fluidventil ausgebildeten Andockmittel einstellbar, wobei hierzu das Andockelement in den unterschiedlichen Positionen an unterschiedlichen Stellen dichtend mit dem Kolben zusammenwirkt, um somit in den verschiedenen Relativpositionen verschiedene bzw. unterschiedliche Fluidwege und/oder unterschiedliche Durchflussquerschnitte für Milch freizuschalten und/oder zu begrenzen. Anders ausgedrückt begrenzt das hülsenförmige Andockelement in den unterschiedlichen Relativpositionen zusammen mit dem Kolben unterschiedliche Fluidwege und/oder Durchflussquerschnitte für Milch, wobei hierzu die Hülse an unterschiedlichen Positionen entlang ihrer Längserstreckung dichtend mit dem Kolben zusammenwirkt. Die vorerwähnten, unterschiedlichen Fluidwege und/oder Durchflussquerschnitte sind dabei bevorzugt als Nuten oder Nutabschnitte am Außenumfang des Kolbens und/oder am Innenumfang der Hülse realisiert.

Ganz besonders bevorzugt ist eine Ausführungsform der Getränkezubereitungsvorrichtung, bei der der vorerwähnte Kolben in der mindestens einen Parkposition eine, insbesondere stirnseitige, Einlassöffnung (Andocköffnung) des Andockelementes von dem Kolben verschlossen ist. Mit anderen Worten kann auf zusätzlich zu dem Andockelement vorgesehene, aktiv bewegbare Verschlusselemente zum Verschließen der vorgenannten Einlassöffnung verzichtet werden, sondern die Einlassöffnung kann durch aktives Verstellen des Andockelementes relativ zu dem Kolben verschlossen werden, in dem in der Parkposition der Kolben zumindest in die Einlassöffnung hineinragt oder diese bevorzugt axial durchsetzt. Somit ist dann auch gewährleistet, dass die allermeisten, mit Milch kontaminierten Flächen in einer bevorzugten, später noch zu erläuternden Spülposition, in der ein Spülkanal fluidleitend mit der Milchleitung verbunden ist, gespült werden.

Im Hinblick auf die Realisierung der unterschiedlichen freien Durchflussquerschnitte für Milch in den beiden Andockpositionen, in denen das Andockelement fluidleitend mit dem Versorgungsanschluss verbunden ist, gibt es unterschiedliche Möglichkeiten. So ist es möglich und bevorzugt am Außenumfang des vorgenannten Kolbens und/oder am Innenumfang des, bevorzugt hülsenförmigen Andockelementes mindestens eine, bevorzugt sich in Richtung der Längserstreckung des Andockelementes erstreckende offene Nut vorzusehen, durch welche die Milch in Richtung Milchleitung strömen muss, wobei das jeweils andere Teil (Andockelement oder Kolben), insbesondere in radialer Richtung dichtend mit dem Nutrand zusammenwirkt, wobei in den unterschiedlichen Andockpositionen unterschiedliche Nutquerschnitte mit dem jeweils anderen Bauteil zusammenwirken, so dass in der ersten und in der zweiten Andockposition unterschiedliche Milchvolumenströme gefördert werden können. Denkbar ist es auch zusätzlich oder anstelle der vorgenannten Nut mindestens einen im Inneren des Kolbens oder des Andockelementes vorgesehenen Kanal zu realisieren, der in eine der Andockpositionen mit Milch durchströmbar ist und in der anderen nicht oder der in den unterschiedlichen Andockpositionen unterschiedlich große freie Anström- oder Ausströmquerschnitte (Durchflussquerschnitte) aufweist.

Als besonders vorteilhaft hat es sich herausgestellt, wenn eine vorerwähnte, dann nach radial außen offene, insbesondere langgestreckte, Nut im Kolben vorgesehen ist, wobei diese Nut bzw. dieser Nutabschnitt bevorzugt fluidleitend kommuniziert mit einem verbreiterten und/oder tieferen Nutabschnitt bzw. einer verbreiterten und/oder tieferen Aussparung, die einen größeren Strömungsquerschnitt bereitstellt, wobei das Andockelement in einer der Andockpositionen mit der (schmäleren und/oder weniger tiefen) Nut bzw. den Nuträndern dichtend zusammenwirkt und in der anderen der Andockpositionen mit dem Rand des breiteren und/oder tieferen Nutabschnitts bzw. der Aussparung.

Selbstverständlich ist es auch möglich, die vorerwähnte Nut, dann nach radial innen offen, am Innenumfang des Andockelementes vorzusehen, ebenso wie die Aussparung, wobei dann der Kolben je nach Andockposition entweder dichtend mit der schmäleren Nut bzw. dem Nutrand oder dem Aussparungsrand zusammenwirkt. Auch ist es möglich, die unterschiedlichen Nut- bzw. Aussparungsabschnitte auf den Kolben und das Andockelement zu verteilen.

Wie bereits angedeutet, kann der in der Parkposition fluidleitend mit der Milchleitung verbundene Kanal als in die Andockmittel mündender Spülkanal ausgebildet sein, der mit Spülmedium versorgbar ist. Bei dem Spülmedium kann es sich um Wasser und/oder Dampf handeln. In der mindestens einen Andockposition ist der vorerwähnte Spülkanal durch die Relativpositionierung des Andockelementes zu dem Kolben fluidisch von der Milchleitung getrennt, um eine Kontamination der Milch mit Spülmedium zu vermeiden.

Grundsätzlich ist es möglich, für den Fall, dass mit der Getränkezubereitungsvorrichtung Milchschaum produziert wird, der Milch Luft an einer von den Andockmitteln unterschiedlichen Positionen zuzuführen, beispielsweise unmittelbar in die Milchleitung und/oder in eine eingangs erwähnte Misch- bzw. Aufschäumkammer. Besonders zweckmäßig ist nun einen Ausführungsform, bei der eine Luftleitung in die Andockmittel mündet, wobei die Luftleitung durch Verstellen des Andockelementes zwischen den zwei unterschiedlichen, beabstandeten Andockpositionen öffnen- und schließbar ist. Anders ausgedrückt ist die Luftleitung aufgrund der Positionierung des Andockelementes in der Milchaufschäumposition (zweite Andockposition) geöffnet, d.h. fluidleitend bzw. luftleitend mit der Milchleitung verbunden ist und in der Milcherwärmungsposition (erste Andockposition) verschlossen ist oder zumindest weniger weit geöffnet ist als in der Milchaufschäumposition.

Im Hinblick auf die Realisierung der voneinander beabstandeten Andockpositionen ist es von Vorteil, wenn ein Überdeckungsgrad zwischen dem Andockelement und dem Versorgungsanschluss in der Milchaufschäumposition und der Milcherwärmungsposition voneinander unterschiedlich ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: Ausschnittsweise eine nach dem Konzept der Erfindung ausgebildete Getränkezubereitungsvorrichtung,
- Fig. 2: Andockmittel der Getränkezubereitungsvorrichtung gemäß Fig. 1 mit einem in einer Parkposition befindlichen Andockelement,
- Fig. 3: die Andockmittel gemäß Fig. 2, wobei hier das Andockelement in einer ersten Andockposition (Milcherwärmungsposition) angeordnet ist,
- Fig. 4: die Andockmittel gemäß den Fig. 2 und 3 mit einer in einer zweiten, von der ersten Andockposition beabstandeten Andockposition (Milchaufschäumposition),
- Fig. 5: ein alternatives Ausführungsbeispiel von Andockmitteln, die zusätzlich in die eine Luftleitung mündet, die in einer in Fig. 5 gezeigten ersten Andockposition (Milcherwärmungsposition) fluidleitend von einer Milchleitung entkoppelt ist, und
- Fig. 6: die Andockmittel gemäß Fig. 5 in einer zweiten, von der ersten Andockposition axial beabstandeten Andockposition mit luftleitend mit der Milchleitung verbundener Luftleitung.

In den Figuren sind gleiche Elemente und Elemente mit der gleichen Funktion mit den gleichen Bezugszeichen gekennzeichnet.

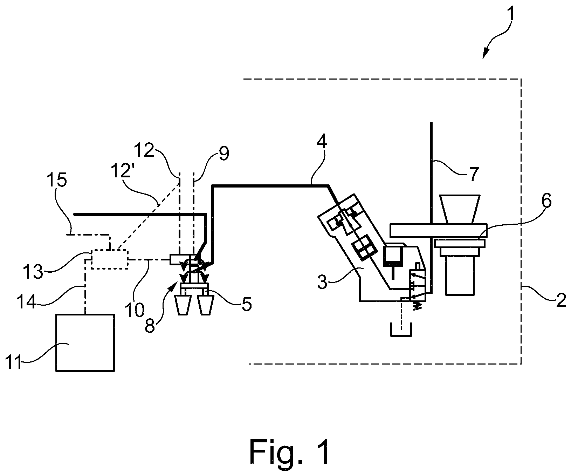

In Fig. 1 ist eine hier lediglich beispielhaft als Kaffeevollautomat ausgebildete Getränkezubereitungsvorrichtung 1 ausschnittsweise dargestellt. Alternativ zu einem Kaffeevollautomaten kann die Getränkezubereitungsvorrichtung auch als Portionseinheitenmaschine, insbesondere Kaffeekapselmaschine ausgebildet sein. Auch muss es sich nicht zwingend um eine Kaffeemaschine handeln - es muss lediglich die Funktionalität zur Erwärmung und/oder zum Aufschäumen von Milch gegeben sein.

Die Getränkezubereitungsvorrichtung 1 umfasst ein Gehäuse 2. In dem Gehäuse 2 befindet sich je eine Brüheinheit 3 zur Herstellung von Kaffee, der über eine Getränkeleitung 4 einem Auslass 5 zuführbar ist. In dem konkreten Ausführungsbeispiel wird der Kaffee gebrüht auf Basis von Kaffeemehl, welches mit einer integralen Kaffeemühle 6 erzeugbar ist. Bei einer alternativen Ausgestaltung als Portionseinheitenmaschine, wird das Kaffeemehl mittels einer Portionseinheit, insbesondere einer Kapsel zugeführt.

Wie aus Fig. 1 weiter zu erkennen ist, mündet in die Brüheinheit 3 eine Heißwasserleitung 7, über die der Brüheinheit 3 Heißwasser zugeführt wird, welches in einem nicht gezeigten Durchlauferhitzer in an sich bekannter Weise erhitzt wird.

Weiter ist zu erkennen, dass die Getränkezubereitungsvorrichtung 1 eine Einrichtung 8 zum Erwärmen und Aufschäumen von Milch aufweist. Diese nicht im Detail dargestellte, an sich bekannte Einrichtung 8 umfasst eine Düsenanordnung mit einer Treibdüse bzw. Strahlpumpe, die mit Dampf aus einer Dampfleitung 9 zur Erzeugung von Unterdruck und zum Erwärmen und/oder Aufschäumen von Milch versorgbar ist. Der Dampf kann je nach Ausgestaltung der Getränkezubereitungsvorrichtung in dem selben Durchlauferhitzer hergestellt werden, wie das Heißwasser zur Versorgung der Brüheinheit 3. Auch ist es denkbar, einen zusätzlichen Dampferzeuger vorzusehen. Die Einrichtung 8 wird mit Milch über eine Milchleitung 10 versorgt, über die durch den vorerwähnten Unterdruck Milch aus einem entnehmbaren Milchbehälter 11 der Getränkezubereitungsvorrichtung 1 bzw. des Getränkezubereitungsvorrichtungssystems angesaugt werden kann.

In die Milchleitung 10 kann gemäß einer ersten Ausführungsvariante, hier beispielhaft im Bereich der Einrichtung 8 Luft über eine Luftleitung 12 zugeführt werden. Eine alternative Luftleitungsführung 12' ist strichliert dargestellt. Hier mündet die Luftleitung 12' unmittelbar in später noch zu erläuternde Andockmittel 13 und kann bei einer vorteilhaften Ausgestaltung der Erfindung mit diesen freigeschaltet oder gesperrt werden.

Mit Hilfe der Andockmittel 13, die fluidleitend fest mit der Milchleitung 10 verbunden sind, kann eine fluidleitende Verbindung zu einem, insbesondere türseitigen oder milchbehälterseitigen Versorgungsanschluss 14 hergestellt werden, indem ein nicht gezeigtes Andockelement der Andockmittel 13 zwischen einer Parkposition und einer von mindestens zwei Andockpositionen mittels eines insbesondere elektromotorischen Antriebs verstellt wird.

In die Andockmittel 13 mündet ein hier als Spülkanal ausgebildeter Kanal 15, über den in einer Parkposition des vorerwähnten Andockelementes die Andockmittel mit Spülmedium, insbesondere Heißwasser und/oder Dampf gespült werden können, wobei der Kanal 15 in den vorerwähnten Andockpositionen bedingt durch die Relativposition des Andockelementes von der Milchleitung 10 abgekoppelt ist, mit welcher er in der Parkposition fluidleitend gekoppelt ist.

Alternativ zur Ausbildung des Spülkanals als aktiver Zuleitungskanal zur Versorgung der Andockmittel mit Spülmedium kann der Kanal auch als Ableitungskanal dienen zum Ausleiten von Spülmedium aus den Andockmitteln, für einen alternativen Fall nach welchem die Andockmittel über die Milchleitung gespült werden - in diesem Fall erfolgt die Zuleitung von Spülmedium bevorzugt in einem Bereich zwischen den Andockmitteln und der Einrichtung zum Erwärmen und Aufschäumen von Milch, beispielsweise über einen Luftkanal oder einen separaten Spülkanal.

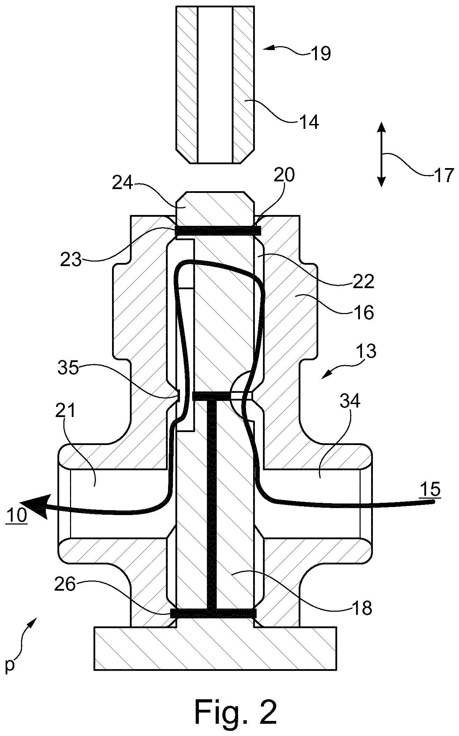

Fig. 2. zeigt nun eine mögliche Ausgestaltungsvariante von Andockmitteln 13. Diese umfassen, wie erwähnt, ein, hier beispielhaft aus einem Elastomermaterial ausgebildetes Andockelement 16, welches mittels eines nicht dargestellten, insbesondere elektromotorischen Antrieb verstellbar ist - in dem konkreten Ausführungsbeispiel rein translatorisch entlang einer axialen Verstellachse 16. Hierzu ist das Andockelement 16 bevorzugt fest mit dem Antrieb verbunden und zusammen mit dem Antrieb relativ zu einer nicht gezeigten Führung verstellbar. Diese Führung ist dann ortsfest angeordnet, ebenso wie ein im Folgenden noch zu erläuternder Kolben 18, welcher sich zumindest abschnittweise im Inneren des hülsenförmigen Andockelementes 16 befindet und zusammen mit diesem in Abhängigkeit von der Relativposition zwischen Andockelement 16 und Kolben 18 unterschiedliche Fluidwege begrenzt.

Wesentlich ist, dass das Andockelement 16 positionsveränderbar ist relativ zu dem Versorgungsanschluss 14, welcher beispielsweise fest an einem Milchbehälter angeordnet ist oder an einer fakultativen, insbesondere verschwenkbar angeordnet Tür. Um eine Kopplung mit diesem Versorgungsanschluss 14 herzustellen, muss sich dieser in der gezeigten Funktionsposition 19 befinden. Je nach Ausgestaltung der Getränkezubereitungsvorrichtung 1 befindet sich der dann nicht verstellbare Versorgungsanschluss dauerhaft in dieser Funktionsposition. Besonders bevorzugt ist es, wenn der Versorgungsanschluss 14 zunächst in diese Funktionsposition verstellt werden muss, insbesondere durch Verschwenken der erwähnten Tür.

Fig. 2 zeigt nun einen Betriebszustand bzw. eine Ventilstellung der als Fluidventil ausgebildeten Andockmittel 13, bei der das Andockelement 16 axial von dem Versorgungsanschluss 14 beabstandet und nicht fluidleitend mit diesem verbunden ist. Eine stirnseitige Einlassöffnung 20 der Andockmittel 13 ist mittels des Kolbens 18 verschlossen, in dem dieser in die Einlassöffnung 20 hineinragt.

In der dargestellten Parkposition P ist ein hier als Spülkanal ausgebildeter Kanal 15 fluidleitend mit einem Milchanschluss 21 (Andockelementauslass) der Andockmittel 13 und damit mit der Milchleitung 10 verbunden. Der Kanal 15 ist mit einem Kanalanschluss 34 der Andockmittel 13, genauer des Andockelementes 16 verbunden. Wird nun über den Kanal 15 Spülmedium zugeführt, gelangt dieses in eine von dem Kolben 18 und dem Andockelement 16 begrenzte Ventilkammer 22 und strömt über diese in die Milchleitung 10. Ein umgekehrter Fluidfluss ist alternativ realisierbar.

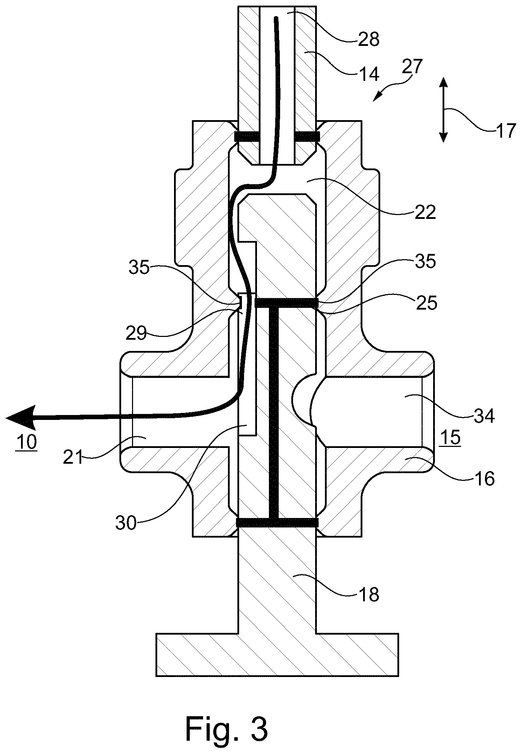

Zu erkennen ist, dass das Andockelement verschiedene Dichtabschnitte aufweist, nämlich einen vorderen Dichtabschnitt 23, der die Einlassöffnung 20 begrenzt, und der in der Parkposition dichtend mit einem vorderen Zylinderabschnitt 24 des Kolbens zusammenwirkt. Ferner ist ein mittlerer Dichtabschnitt 35 vorgesehen, mit welchem der Kanal 15 durch Zusammenwirken mit einem Gegenabschnitt 25 des Kolbens 18 (vgl. Fig. 3) fluidisch von der Milchleitung 10 trennbar ist.

Zudem umfassen die Andockmittel 13 noch einen hinteren Dichtabschnitt 26, zum Abdichten der Ventilkammer 22 in der Zeichnungsebene nach unten bzw. nach hinten. Bei einer alternativen, später noch zu erläuternden Ausführungsform kann mit dem hinteren Dichtabschnitt 26 (oder ein anderer Dichtabschnitt) auch noch eine fakultative Luftleitung freigeschaltet oder versperrt werden.

In Fig. 3 ist zu erkennen, dass im Vergleich zu Fig. 2 das Andockelement 16 translatorisch entlang der Verstellachse 16 nach vorne in Richtung Versorgungsanschluss 14 verstellt wurde. Das Andockelement 16 befindet sich in einer ersten Andockposition 27 von insgesamt zwei Andockpositionen. In der ersten Andockposition 27 ragt der Versorgungsanschluss 14 in das Andockelement 16 hinein, so dass die Milchzuleitung 28 des Andockelementes in die Ventilkammer 22 mündet. Gleichzeitig wirkt der mittlere Dichtabschnitt 24 so mit dem Kolben 18 zusammen, dass der Kanal 15 von der Milchleitung 10 bzw. dem als Sauganschluss ausgebildeten Milchanschluss 21 (Andockelementauslass) entkoppelt ist. Es besteht eine fluidleitende Verbindung zwischen dem Versorgungsanschluss 14 und der Milchleitung 10. Die Milch kann in axialer Richtung radial zwischen Kolben 18 und Innenumfang des Andockelementes 16 hin zur Milchleitung 10 strömen. Dabei wird der freie Durchflussquerschnitt für Milch verengt, da die Milch durch einen verengten Nutabschnitt 29 einer im Außenumfang des Kolbens 18 vorgesehenen Nut strömen muss. Hierzu begrenzen die mittleren Dichtmittel 24 mit dem verengten Nutabschnitt 29 der Nut 30 den vorerwähnten verringerten Querschnitt. Alternativ kann selbstverständlich auch eine solche verengte Nut am Innenumfang des Andockelementes 16 vorgesehen werden, wobei dann auch der Kolben 18 mit diesem verengten Nutquerschnitt den reduzierten freien Milchdurchflussquerschnitt begrenzt.

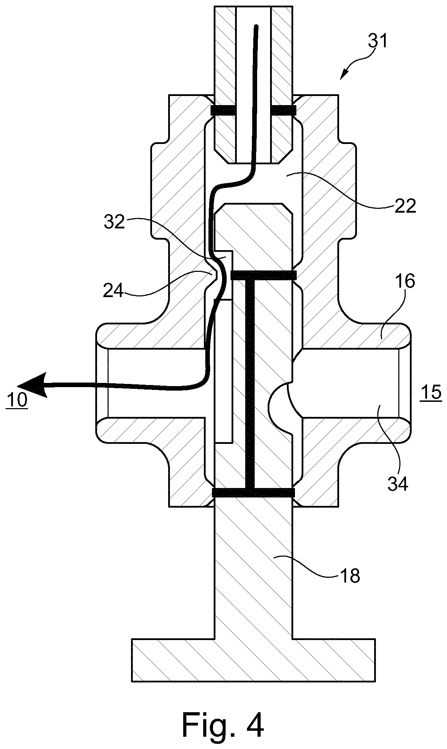

In Fig. 4 ist das Andockelement 16 noch weiter nach vorne verfahren und befindet sich in einer zweiten Andockposition 31. In dieser ist selbstverständlich der Kanal 15 immer noch von der Milchleitung 10 entkoppelt. Wesentlicher Unterschied ist, dass der mittlere Dichtabschnitt 24 nun mit einem verbreiterten Nutabschnitt 32 des Kolbens 18 zusammenwirkt, so dass ein verbreiterter bzw. größerer freier Milchdurchflussquerschnitt freigeschaltet ist und somit bei angenommenen gleichen Saugdruck mehr Milch pro Zeiteinheit angesaugt werden kann. Dies ist wünschenswert für die Herstellung von Milchschaum. Bei dem gezeigten Ausführungsbeispiel wird der Milchleitung 10 an anderer Stelle Luft in an sich bekannter Weise zugeführt, um dann in der Milchkammer der Einrichtung 8 (vgl. Fig. 1) Milchschaum zu erzeugen.

Zu erkennen ist, dass der Überdeckungsgrad zwischen Andockelement 16 und Verbindungsanschluss 14 in den unterschiedlichen Andockpositionen 27, 31 unterschiedlich ist - konkret ist hier die axiale Überdeckung in der zweiten Andockposition 31 größer.

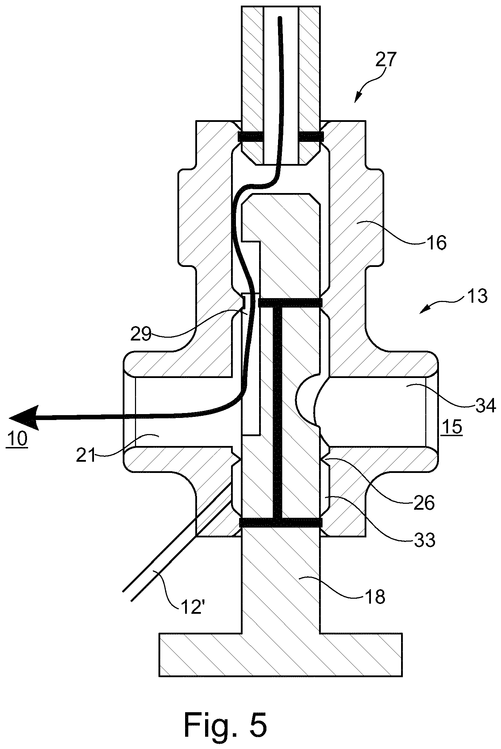

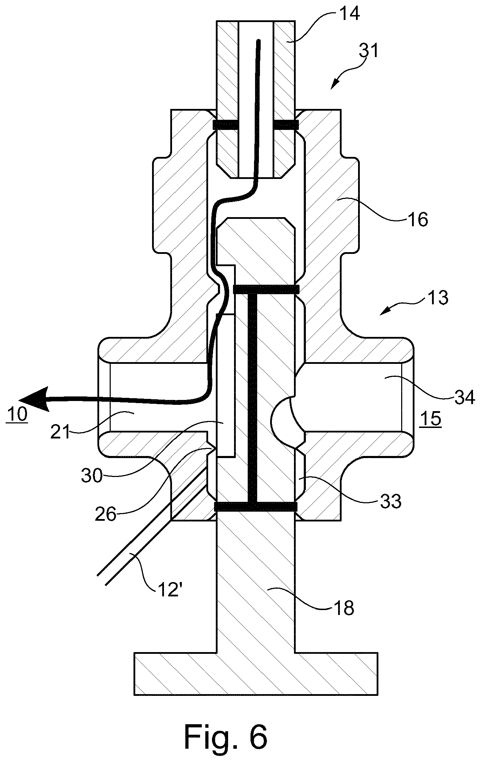

Fig. 5 und Fig. 6 zeigen eine alternative Ausführungsform der Andockmittel 13, wobei zur Vermeidung von Wiederholungen im Wesentlichen auf die Unterschiede zu dem voranstehend erläuterten Ausführungsbeispiel eingegangen wird. Im Hinblick auf die Gemeinsamkeiten, wird auf die Figuren 2 bis 4 mit zugehöriger Figurenbeschreibung verwiesen.

Fig. 5 zeigt das Andockelement 16 in der ersten Andockposition 27, in der Milch durch den verengten Nutquerschnitt 29 des Kolbens 18 strömen muss. Der Kanal 15 ist nicht fluidleitend mit der Milchleitung 10 verbunden.

Im Unterschied zu dem vorstehend erläuterten Ausführungsbeispiel mündet hier in die Andockmittel 13, genauer das Andockelement 16 eine Luftleitung 12', einen hinteren Ventilraum 33, der von dem Kolben 18 und dem Andockelement 16 begrenzt ist. Der hintere Dichtabschnitt 26 des Andockelementes 13 dichtet die hintere Ventilkammer gegenüber der Milchleitung 10 ab. Es wird Milch nur erwärmt, nicht aufgeschäumt.

In Fig. 6 befindet sich das Andockelement 16 wieder in seiner zweiten Andockposition 31. Hier ist nun die hintere Ventilkammer 33 luftleitend über die Nut 30 mit der Milchleitung 10 verbunden, so dass nicht nur Milch über den Versorgungsanschluss 14, sondern auch Luft über die Luftleitung 12' angesaugt werden kann. Zu erkennen ist, dass für die Freischaltung der Luftleitung 12' wiederum die Relativposition zwischen Andockelement 16 und Kolben 18 verantwortlich ist. Der hintere Dichtabschnitt 26 befindet sich nun unmittelbar radial benachbart zur Nut 30.

Selbstverständlich sind auch alternative Anordnungen der Luftleitung und der Dichtabschnitte möglich. Es können auch unterschiedliche Anzahlen von Dichtabschnitten vorgesehen werden, um weitere oder weniger Funktionalitäten zu realisieren.

### Bezugszeichenliste

- 1: Getränkezubereitungsvorrichtung
- 2: Gehäuse
- 3: Brüheinheit
- 4: Getränkeleitung
- 5: Auslass
- 6: Kaffeemühle
- 7: Heißwasserleitung
- 8: Einrichtung zum Erwärmen und/oder Aufschäumen von Milch
- 9: Dampfleitung
- 10: Milchleitung
- 11: Milchbehälter
- 12: Luftleitung
- 12': Luftleitung
- 13: Andockmittel
- 14: Versorgungsanschluss
- 15: Kanal
- 16: Andockelement
- 18: Kolben
- 19: Funktionsposition
- 20: Einlassöffnung
- 21: Milchanschluss (Andockelementauslass)
- 22: Ventilkammer
- 23: vorderer Dichtabschnitt
- 24: vorderen Zylinderabschnitt
- 25: Gegenabschnitt
- 26: hinterer Dichtabschnitt
- 27: erste Andockposition
- 28: Milchzuleitung
- 29: Nutquerschnitt
- 30: Nut
- 31: zweite Andockposition
- 32: verbreiterter Nutabschnitt
- 33: hinterer Ventilraum
- 34: Kanalanschluss
- 35: mittlerer Dichtabschnitt

- P: Parkposition

## Patentansprüche

1. Getränkezubereitungsvorrichtung (1) mit einem Gehäuse (2) und mit einer Einrichtung zum Erwärmen und/oder Aufschäumen von Milch und mit einer Milchleitung (10), über die die Einrichtung (8) zum Erwärmen und Aufschäumen von Milch mit Milch versorgbar ist,
**dadurch gekennzeichnet,**
**dass** die Milchleitung (10) fluidleitend mit Andockmitteln (13) verbunden ist, die ein mittels eines Antriebs, insbesondere eines Elektromotors, zwischen mindestens einer Parkposition (P), einer von der Parkposition (P) beabstandeten ersten Andockposition (27), insbesondere eine Milcherwärmungsposition, und einer von der Parkposition (P) und der ersten Andockposition (27) beabstandeten zweiten Andockposition (31), insbesondere eine Milchaufschäumposition, verstellbares Andockelement (16) umfassen, das in der ersten (27) und der zweiten Andockposition (31) fluidleitend mit einem Versorgungsanschluss (14) für Milch verbunden und in der Parkposition (P) von diesem abgekoppelt ist und dass die Andockmittel (13) als Fluidventil ausgebildet sind, mit denen durch Verstellen des Andockelementes (16) von der ersten (27) in die zweite Andockposition (31) ein freier Durchflussquerschnitt für Milch zum Einstellen eines Milchvolumenstroms veränderbar ist.

2. Getränkezubereitungsvorrichtung nach Anspruch 1, **dadurch gekennzeichnet,**
**dass** der Versorgungsanschluss (14) relativ zu der Andockposition (27, 31) verstellbar angeordnet ist.

3. Getränkezubereitungsvorrichtung nach Anspruch 2,
**dadurch gekennzeichnet,**
**dass** der Versorgungsanschlusses (14) an einer relativ zu dem Gehäuse (2) verstellbaren, insbesondere verschwenkbaren, bevorzugt Andockmittel (13) für einen Milchvorratsbehälter aufweisenden, Tür der Getränkezubereitungsvorrichtung (1) und/oder an einem entnehmbaren Milchvorratsbehälter der Getränkezubereitungsvorrichtung (1) angeordnet ist.

4. Getränkezubereitungsvorrichtung nach Anspruch 3,
**dadurch gekennzeichnet,**
**dass** der Versorgungsanschluss (14) derart an der Tür angeordnet ist, dass dieser unabhängig von einer Links- oder Rechtsanschlagmontage der Tür bei geschlossener Tür derart angeordnet ist, dass das Andockelement (16) in seiner Andockposition (27, 31) fluidleitend mit dem Versorgungsanschluss (14) verbunden ist.

5. Getränkezubereitungsvorrichtung nach einem der vorhergehenden Ansprüche,
**dadurch gekennzeichnet,**
**dass** das Andockelement (16) fest mit Antrieb verbunden und zum Verstellen zwischen der mindestens einen Parkposition (P) und den Andockpositionen (27, 31) zusammen mit dem Antrieb entlang einer ortsfesten Führung, insbesondere einer Zahnstange oder einer Spindel, bevorzugt translatorisch verstellbar ist.

6. Getränkezubereitungsvorrichtung nach einem der vorhergehenden Ansprüche,
**dadurch gekennzeichnet,**
**dass** das Andockelement (16) als Andockhülse ausgebildet ist, in der ein, bevorzugt ortsfest angeordneter, Kolben (18) aufgenommen ist und dass durch, bevorzugt translatorisches, Relativverstellen des Andockelementes (16) relativ zu dem Kolben (18) der freie Durchflussquerschnitt für die Milch veränderbar ist.

7. Getränkezubereitungsvorrichtung nach Anspruch 6,
**dadurch gekennzeichnet,**
**dass** der Kolben (18) derart mit dem Andockelement (16) zusammenwirkend ausgebildet und angeordnet ist, dass durch Verstellen des Andockelementes (16) in die mindestens eine Parkposition (P) eine Einlassöffnung des Andockelementes (16) von dem Kolben (18) verschließbar ist.

8. Getränkezubereitungsvorrichtung einem der Ansprüche 6 oder 7,
**dadurch gekennzeichnet,**
**dass** der veränderbare freie Durchflussquerschnitt von der Andockhülse und dem Kolben (18) begrenzt ist, insbesondere derart, dass ein kleinerer freier Durchflussquerschnitt von einer, bevorzugt langgestreckten, Nut (30) im Kolben (18) oder in der Andockhülse begrenzt ist und ein größerer freier Durchflussquerschnitt von einem verbreiterten und/oder tieferen Abschnitt der Nut (30) oder einer an die Nut (30) angrenzenden Aussparung im Kolben (18) oder der Andockhülse und dass durch Verstellen der Andockhülse eine Relativverstellung eines den freien Durchflussquerschnitt begrenzenden Dichtabschnittes relativ zu der Nut (30) und/oder der Aussparung realisiert ist.

9. Getränkezubereitungsvorrichtung nach einem der vorhergehenden Ansprüche,
**dadurch gekennzeichnet,**
**dass** das Fluidventil derart ausgebildet ist, dass mit diesem durch Verstellen des Andockelementes (16) mindestens ein Kanal (15) fluidleitend mit der Milchleitung (10) verbindbar und von diesem fluidisch trennbar ist.

10. Getränkezubereitungsvorrichtung nach Anspruch 9,
**dadurch gekennzeichnet,**
**dass** das Fluidventil derart ausgebildet ist, dass in der Parkposition (P) ein in die Andockmittel (13) mündender, bevorzugt mit Wasser und/oder Dampf versorgbarer, als Spülkanal ausgebildeter Kanal, fluidleitend mit der Milchleitung (10) verbunden und durch Verstellen des Andockelementes (16) in die Andockposition (27, 31) fluidisch von der Milchleitung (10) trennbar ist.

11. Getränkezubereitungsvorrichtung nach einem der Ansprüche 9 oder 10,
**dadurch gekennzeichnet,**
**dass** das Fluidventil derart ausgebildet ist, dass in der zweiten Andockposition (31) eine in die Andockmittel (13) mündende Luftleitung (12') geöffnet ist und somit Luft in einen angesaugten Milchstrom eintragbar, insbesondere einsaugbar, ist und dass der Luftanschluss durch Verstellen des Andockelementes (16) in die erste Andockposition (27) schließbar oder zumindest ein freier Querschnitt für Luft verengbar ist.

12. Getränkezubereitungsvorrichtung nach einem der vorhergehenden Ansprüche,
**dadurch gekennzeichnet,**
**dass** ein Überdeckungsgrad zwischen dem Andockelement (16) und dem Versorgungsanschluss (14) in der ersten (27) und der zweiten Andockposition (31) unterschiedlich ist.

13. Verfahren zum Betreiben einer Getränkezubereitungsvorrichtung (1) nach einem der vorhergehenden Ansprüche, **dadurch gekennzeichnet, dass** das Andockelement (16) zum fluidleitenden Verbinden der Milchleitung (10) mit dem Versorgungsanschluss (14) für Milch mittels des Antriebs, insbesondere des Elektromotors, von der mindestens einen Parkposition (P) und in die davon beabstandete erste (27) oder zweite Andockposition (31) verstellt und dadurch an den Versorgungsanschluss (14) angekoppelt wird, und dass das Andockelement (16) zum fluidischen Trennen der Milchleitung (10) von dem Versorgungsanschluss (14) aus der ersten (27) oder zweiten Andockposition (31) in die mindestens eine Parkposition (P) verstellt wird, und dass der freie Durchflussquerschnitt für Milch zum Einstellen des zu der Erwärmungs- und Aufschäumeinrichtung geförderten Milchvolumenstroms durch Verstellen des Andockelementes (16) von der ersten (27) in die zweite Andockposition (31) verändert wird.

14. Verfahren nach Anspruch 13,
**dadurch gekennzeichnet,**
**dass** vor dem Verstellen des Andockelementes (16) aus der mindestens einen Parkposition (P) in die erste mindestens eine Andockposition (27) der Versorgungsanschluss (14) in eine Funktionsposition, insbesondere durch Schließen einer den Versorgungsanschluss (14) aufweisenden Tür, verstellt wird, in der das Andockelement (16) in seiner Andockposition (27, 31) an den Versorgungsanschluss (14) andockbar und/oder angedockt ist.

## Claims

1. Beverage making apparatus (1) having a housing (2) and a device for heating and/or frothing milk and having a milk line (10), via which the device (8) for heating and frothing milk can be supplied with milk,
**characterized in that**
the milk line (10) is connected in a fluid-channeling manner with docking means (13) which comprise a docking element (16) that can be adjusted by means of a drive, in particular an electric motor, between at least one parked position (P), a first docking position (27) spaced from the parked position (P), in particular a milk heating position, and a second docking position (31) spaced from the parked position (P) and the first docking position (27), in particular a milk frothing position, the docking element being connected in a fluid-channeling manner with a supply port (14) for milk in the first (27) and the second docking position (31) and being de-coupled from said port in the parked position (P) and **in that** the docking means (13) are formed as a fluid valve, by means of which a free through-flow cross-section for milk for setting a milk volume flow can be changed by adjusting the docking element (16) from the first (27) to the second docking position (31).

2. Beverage making apparatus according to claim 1,
**characterized in that**
the supply port (14) is arranged to be displaceable with respect to the docking position (27, 31).

3. Beverage making apparatus according to claim 2,
**characterized in that**
the supply port (14) is arranged at a door of the beverage making apparatus (1) which is adjustable, in particular pivotable, relative to the housing (2) and preferably comprises docking means (13) for a milk reservoir, and/or at a removable milk reservoir of the beverage making apparatus (1).

4. Beverage making apparatus according to claim 3,
**characterized in that**
the supply port (14) is arranged at the door such that the port, when the door is closed and regardless of a left- or right-sided installation of the door, is arranged such that the docking element (16) in the docking position (27, 31) thereof is connected to the supply port (14) in a fluid-channeling manner.

5. Beverage making apparatus according to one of the preceding claims,
**characterized in that**
the docking element (16) is fixedly connected to drive and is adjustable for adjustment, preferably in a translatory manner, between the at least one parked position (P) and the docking positions (27, 31) together with the drive along a stationary guidance, in particular a gear rack or a spindle.

6. Beverage making machine according to one of the preceding claims.
**characterized in that**
the docking element (16) is formed as a docking sleeve, in which a, preferably stationarily arranged, piston (18) is received and **in that** the free through-flow cross-section for the milk can be changed by, preferably translatory, relative adjustment of the docking element (16) relative to the piston (18).

7. Beverage making apparatus according to claim 6,
**characterized in that**
the piston (18) is formed to be cooperating with the docking element (16) and arranged such that an inlet position of the docking element (16) is closable by the piston (18) by adjusting the docking element (16) in the at least one parked position (P).

8. Beverage making apparatus according to one of claims 6 or 7,
**characterized in that**
the changeable free through-flow cross-section is limited by the docking sleeve and the piston (18), in particular such that a smaller free through-flow cross-section is limited by a, preferably elongate, groove (30) in the piston (18) or in the docking sleeve and a larger free through-flow cross-section is limited by a wider and/or deeper section of the groove (30) or a recess in the piston (18) adjacent to the groove (30) or the docking sleeve and **in that** a relative adjustment of a sealing section limiting the free through-flow cross-section relative to the grove (30) and/or the recess is realized by adjustment of the docking sleeve.

9. Beverage making apparatus according to one of the preceding claims,
**characterized in that**
the fluid valve is formed such that with this valve, at least one channel (15) is connectable to the milk line (10) in a fluid-channeling manner and separable from the channel fluidicly by adjustment of the docking element (16).

10. Beverage making machine according to claim 9,
**characterized in that**
the fluid valve is formed such that in the parked position (P) a channel ending into the docking means (13), which can preferably be supplied with water and/or vapor and which is formed as a flush channel and connected to the milk line (10) in a fluid-channeling manner and which can be fluidicly-separated from the milk line (10) by adjustment of the docking element (16) into the docking position (27, 31).

11. Beverage making apparatus according to one of claims 9 or 10,
**characterized in that**
the fluid valve is formed such that in the second docking position (31) an air line (12') ending into the docking means (13) is opened and thus air can be introduced, in particular sucked, into a sucked milk flow, and **in that** the air port is closeable or at least a free cross-section for the air can be narrowed by adjustment of the docking element (16) into the first docking position (27).

12. Beverage making apparatus according to one of the preceding claims,
**characterized in that**
an overlap rate between the docking element (16) and the supply port (14) is different in the first (27) and the second docking position (31).

13. Method of operating a beverage making apparatus (1) according to one of the preceding claims, **characterized in that** the docking element (16) for connecting the milk line (10) with the supply port (14) for milk in a fluid-channeling manner is adjusted by means of the drive, in particular the electric motor, from the at least one parked position (P) and into the spaced first (27) or second docking position (31) and thereby coupled to the supply port (14), and **in that** the docking element (16) is adjusted from the first (27) or second docking position (31) into the at least one parked position (P) for fluidicly separating the milk line (10) from the supply port (14), and **in that** the free through-flow cross-section for milk is changed by adjusting the docking element (16) from the first (27) to the second docking position (31) for setting the milk volume flow supplied to the heating and frothing device.

14. Method according to claim 13,
**characterized in that**
prior to adjusting the docking element (16) from the at least one parked position (P) into the first at least one docking position (27), the supply port (14) is adjusted into a functional position, in particular by closing a door comprising the supply port (14), in which the docking element (16) in the docking position (27, 31) thereof can be docked to and/or is docked to the supply port (14).

## Revendications

1. Dispositif de préparation de boisson (1) avec un carter (2) et avec un mécanisme destiné à faire chauffer et/ou à faire mousser du lait et avec une ligne de lait (10), par l'intermédiaire de laquelle le mécanisme (8) destiné à faire chauffer et à faire mousser le lait peut être approvisionné en lait, **caractérisé en ce que** la ligne de lait (10) est raccordée avec des moyens de couplage (13) de manière à assurer la circulation du fluide, lesquels comprennent un élément de couplage (16) ajustable au moyen d'un entraînement, en particulier d'un moteur électrique, entre au moins une position de repos (P), une première position de couplage (27) se trouvant à distance de la position de repos (P), en particulier une position destinée à faire chauffer le lait, et une deuxième position de couplage (31), se trouvant à distance à la fois de la position de repos (P) et de la première position de couplage (27), en particulier une position destinée à faire mousser le lait, lequel élément de couplage est relié à un raccordement d'alimentation (14) pour le lait, de manière à assurer la circulation du fluide, dans la première position de couplage (27) et dans la deuxième position de couplage (31) et est découplé par ledit raccordement d'alimentation dans la position de repos (P) ; et **caractérisé en ce que** les moyens de couplage (13) se présentent sous la forme de soupapes de fluide au moyen desquelles une section libre de débit pour le lait, destinée au réglage d'un flux de volume de lait, peut être modifiée en ajustant l'élément de couplage (16) depuis la première position de couplage (27) vers la deuxième position de couplage (31).

2. Dispositif de préparation de boisson selon la revendication 1, **caractérisé en ce que** le raccordement d'alimentation (14) est disposé, de manière à pouvoir être ajusté par rapport à la position de couplage (27, 31).

3. Dispositif de préparation de boisson selon la revendication 2, **caractérisé en ce que** le raccordement d'alimentation (14) est disposé au niveau d'une porte du dispositif de préparation de boisson (1), laquelle porte présente de préférence des moyens de couplage (13) pour une cuve de stockage du lait qui peuvent être ajustés, en particulier de manière à pouvoir pivoter, par rapport au carter (2) et/ou au niveau d'une cuve de stockage du lait amovible du dispositif de préparation de boisson (1).

4. Dispositif de préparation de boisson selon la revendication 3, **caractérisé en ce que** le raccordement d'alimentation (14) est disposé au niveau de la porte, de telle sorte que ledit raccordement d'alimentation est disposé quelle que soit la position de montage de la butée de la porte, c'est-à-dire à droite ou à gauche, quand la porte est fermée, de telle sorte que l'élément de couplage (16) est relié au raccordement d'alimentation (14) dans sa position de couplage (27, 31), de manière à assurer la circulation du fluide.

5. Dispositif de préparation de boisson selon l'une des revendications précédentes, **caractérisé en ce que** l'élément de couplage (16) est raccordé de manière solidaire à l'entraînement et peut être ajusté conjointement avec l'entraînement, de préférence par un mouvement de translation, le long d'une glissière stationnaire, en particulier le long d'une crémaillère ou d'une broche en vue de l'ajustement entre l'au moins une position de repos (P) et les positions de couplage (27, 31).

6. Dispositif de préparation de boisson selon l'une des revendications précédentes, **caractérisé en ce que** l'élément de couplage (16) se présente sous la forme d'une douille de couplage dans laquelle vient se loger un piston (18) disposé de préférence de manière stationnaire ; et **en ce que** la section libre de débit pour le lait peut être modifiée par l'intermédiaire d'un ajustement relatif de l'élément de couplage (16) par rapport au piston (18), de préférence par un mouvement de translation.

7. Dispositif de préparation de boisson selon la revendication 6, **caractérisé en ce que** le piston (18) est conçu de manière à fonctionner en interaction avec l'élément de couplage (16) et est disposé de telle sorte qu'un orifice d'admission de l'élément de couplage (16) peut être obturé par le piston (18), par l'ajustement de l'élément de couplage (16) dans l'au moins une position de repos (P).

8. Dispositif de préparation de boisson selon l'une des revendications 6 ou 7, **caractérisé en ce que** la section libre de débit pouvant être modifiée est limitée par la douille de couplage et par le piston (18), en particulier de telle sorte qu'une section libre de débit plus réduite est limitée par une rainure (30), de préférence allongée, dans le piston (18) ou dans la douille de couplage et une section libre de débit plus importante est obtenue par une section plus élargie et/ou plus profonde de la rainure (30) ou par une cavité dans le piston (18), laquelle est adjacente à la rainure (30), ou par la douille de couplage et de telle sorte que par l'ajustement de la douille de couplage, et **en ce qu'**un réglage relatif d'une section d'étanchéité, délimitant la section libre de débit, est réalisé par rapport à la rainure (30) et/ou à la cavité.

9. Dispositif de préparation de boisson selon l'une des revendications précédentes, **caractérisé en ce que** la soupape de fluide est conçue de telle sorte que celle-ci permet, par ajustement de l'élément de couplage, (16) de raccorder au moins un canal (15) à la ligne de lait (10), de manière à assurer la circulation du fluide, et que ledit canal peut être séparé de manière fluidique de ladite soupape de fluide.

10. Dispositif de préparation de boisson selon la revendication 9, **caractérisé en ce que** la soupape de fluide est conçue de telle sorte que, dans la position de repos (P), une conduite se présentant sous la forme d'un canal de rinçage, pouvant de préférence être alimentée avec de l'eau et/ou avec de la vapeur et débouchant dans les moyens de couplage (13), est reliée à la ligne de lait (10), de manière à assurer la circulation du fluide, et peut être séparée de manière fluidique de la ligne de lait (10) par l'ajustement de l'élément de couplage (16) dans la position de couplage (27, 31).

11. Dispositif de préparation de boisson selon l'une des revendications 9 ou 10, **caractérisé en ce que** la soupape de fluide est conçue de telle sorte que, dans la deuxième position de couplage (31), une conduite d'air (12') débouchant dans les moyens de couplage (13) est ouverte, permettant ainsi d'introduire, en particulier d'aspirer, de l'air dans un flux de lait aspiré ; et de telle sorte que l'alimentation en air peut être obturée en ajustant l'élément de couplage (16) dans la première position de couplage (27) ou de telle sorte qu'une libre section transversale pour l'air peut être tout au moins rétrécie.

12. Dispositif de préparation de boisson selon l'une des revendications précédentes, **caractérisé en ce qu'**un niveau de recouvrement se trouvant entre l'élément de couplage (16) et le raccordement d'alimentation (14) est différent dans la première position de couplage (27) et dans la deuxième position de couplage (31).

13. Procédé destiné au fonctionnement d'un dispositif de préparation de boisson (1) selon l'une des revendications précédentes, **caractérisé en ce que** l'élément de couplage (16) destiné à la jonction entre la ligne de lait (10) avec le raccordement d'alimentation (14) pour le lait, de manière à assurer la circulation du fluide, est ajusté au moyen de l'entraînement, en particulier du moteur électrique, depuis l'au moins une position de repos (P) vers la première position de couplage (27) ou la deuxième position de couplage (31), lesquelles sont situées à distance de la position de repos, et est de ce fait couplé au raccordement d'alimentation (14) ; et **caractérisé en ce que** l'élément de couplage (16), destiné à la séparation fluidique de la ligne de lait (10) avec le raccordement d'alimentation (14), est ajusté depuis la première position de couplage (27) ou la deuxième position de couplage (31) dans l'au moins une position de repos (P) ; et **caractérisé en ce que** la section libre de débit pour le lait destinée au réglage du flux de volume de lait transporté vers le mécanisme destiné à faire chauffer et à faire mousser le lait est modifiée par l'ajustement de l'élément de couplage (16) depuis la première position de couplage (27) dans la deuxième position de couplage (31).

14. Procédé selon la revendication 13, **caractérisé en ce que** avant l'ajustement de l'élément de couplage (16) à partir de l'au moins une position de repos (P) dans la première position de couplage (27), le raccordement d'alimentation (14) est ajusté dans une position de fonctionnement, en particulier par la fermeture d'une porte présentant le raccordement d'alimentation (14) et dans laquelle l'élément de couplage (16) peut être couplé et/ou est couplé dans sa position de couplage (27, 31) au niveau du raccordement d'alimentation (14).
